(19) Europäisches Patentamt

European Patent Office

Office européen des brevets

(11) **EP 0 968 751 B1**

(12) **EUROPÄISCHE PATENTSCHRIFT**

(45) Veröffentlichungstag und Bekanntmachung des Hinweises auf die Patenterteilung:
**16.11.2005   Patentblatt 2005/46**

(51) Int Cl.⁷: **B01D 53/78**, B01D 53/74,
B01D 53/68, B01J 19/24

(21) Anmeldenummer: **99105976.7**

(22) Anmeldetag: **25.03.1999**

(54) **Flüssigkeitskreislauf für eine Waschflüssigkeit zur Neutralisation und Abscheidung**

Liquid circulation system for a scrubbing liquid used for neutralisation and separation

Circulation de liquide pour un liquide de lavage utilisé pour neutralisation et séparation

(84) Benannte Vertragsstaaten:
**AT DE FR GB IT**

(30) Priorität: **30.06.1998   DE 19829160**

(43) Veröffentlichungstag der Anmeldung:
**05.01.2000   Patentblatt 2000/01**

(73) Patentinhaber:
  • **DAS-DÜNNSCHICHT ANLAGEN SYSTEME GmbH DRESDEN**
    **D-01217 Dresden (DE)**
  • **VSS- Umwelttechnik GmbH**
    **53842 Troisdorf (DE)**
  • **K- Kunststoffsystems GmbH**
    **56424 Staudt (DE)**

(72) Erfinder:
  • **Reichardt, Horst, Dr.**
    **01219 Dresden (DE)**
  • **Gehmlich, Konrad**
    **01662 Meissen (DE)**
  • **Hofmann, Gerold**
    **01279 Dresden (DE)**
  • **Wiesenberg, Wido**
    **01109 Dresden (DE)**
  • **Merforth, Egbert**
    **01099 Dresden (DE)**
  • **Firkert, Günter**
    **01159 Dresden (DE)**
  • **Wilde, Michael**
    **01219 Dresden (DE)**
  • **Ritter, Tilmann**
    **01129 Dresden (DE)**
  • **Vosen, Michael**
    **50859 Köln-Lövenicht (DE)**
  • **Roos, Christoph**
    **56235 Ransbach-Baumbach (DE)**

(74) Vertreter: **Schneck, Herbert et al**
    **Rau, Schneck & Hübner**
    **Patentanwälte**
    **Königstrasse 2**
    **90402 Nürnberg (DE)**

(56) Entgegenhaltungen:
    **EP-A- 0 801 970          WO-A-97/24172**
    **DE-A- 4 003 370**

**Beschreibung**

Die Erfindung betrifft einen Flüssigkeitskreislauf für eine Waschflüssigkeit, der für eine Waschstrekke eines Reaktors zur Reinigung von schadstoffhaltigen Abgasen einzusetzen ist.

In dem Reaktor, vorzugsweise der Brennkammer einer Gasreinigungseinrichtung, werden Schadstoffe einer Fertigungsanlage in einer Reaktion zersetzt oder in einer Oxidations- oder Redoxreaktion in feste Bestandteile oder flüchtige hydrolisierbare Gase umgewandelt. Diese Sekundärprodukte der Abgasverbrennung sind meist ebenfalls noch schädlich. Derartige Gasreinigungseinrichtungen und damit Reaktoren mit einer Waschstrecke werden u. a. zur Reinigung von Abgasen aus Anlagen zum Abscheiden und Abtragen durch Plasmaprozesse oder durch chemische Dampfphasenabscheidung, vorzugsweise zur Herstellung von Halbleiterschaltkreisen eingesetzt. Es ist aber auch der Einsatz des Flüssigkeitskreislaufes für andere Aufgaben der chemischen Verfahrenstechnik oder bei der Lösung von Aufgaben der Umwelttechnik möglich.

In der Waschstrecke wird der heiße Gasstrom abgekühlt, gasförmige Sekundärprodukte der Abgasverbrennung werden von der Waschflüssigkeit absorbiert oder sorbiert, hydrolisiert und neutralisiert. Feste Stoffe, die im Reaktor oder in der Waschstrecke entstehen, werden vom Waschmittel aus dem Gas gewaschen und an anderer Stelle des Flüssigkeitskreislaufes separiert und aus dem Flüssigkeitskreislauf entfernt (US-A 8 889 002, EP 0 346 893 B1).

Der mehrstufige Reinigungsprozeß des Abgases wird meist in einer Einrichtung ausgeführt, in der Reaktor und Waschstrecke zu einer konstruktiven Einheit zusammengefaßt sind (DE 43 20 044, EP 89 110 875). In eine solche Einheit wird zweckmäßigerweise auch der Flüssigkeitskreislauf für die Waschflüssigkeit integriert. Insgesamt wird eine solche Einheit zu einer Gasreinigungseinrichtung durch Baugruppen zur Medienversorgung und Baugruppen zur elektronischen Versorgung und Steuerung sowie pneumatische Baugruppen komplettiert.

Der Flüssigkeitskreislauf besteht zunächst aus einem Behälter für die Waschflüssigkeit, der üblicherweise meist aus einem Kunststoff in Schweiß- und/oder Tiefziehkonstruktion hergestellt ist (EP 0 801 970 A1). Die Umwälzung der Waschflüssigkeit erfolgt mit einer Pumpe, häufig einer Tauchpumpe, über den Vorlauf in die Waschstrecke. Die Waschflüssigkeit fließt, meist drucklos, über den Rücklauf wieder in den Flüssigkeitsbehälter. Weitere, die Aufgabe des Flüssigkeitskreislaufes sichernde Funktionen oder Baugruppen sind: Ein Wärmetauscher zur Kühlung der Waschflüssigkeit, die Dosierung für die Laugen oder Säuren und die Frischwasserzufuhr in den Behälter sowie Einrichtungen zur Abscheidung von festen Teilchen und Schlämmen zweckmäßigerweise innerhalb des Behälters. Meßwerte zur Kontrolle und Steuerung der einzelnen Funktionen und Baugruppen des Flüssigkeitskreislaufes werden durch Anzahl von Sensoren wie zum Beispiel pH-Sensor, Temperatursensoren und Niveausensoren bereitgestellt.

Der Behälter für die Waschflüssigkeit ist in einem Sicherheitsbehälter eingesetzt und mit notwendigen Elementen zum Handling im Havariefall, wie Leckwarnsensor, Niveausensor und Pumpe zum Abpumpen eventuell aus dem Behälter ausgetretener Waschflüssigkeit, ergänzt.

Im Betrieb wird mit Hilfe der Umwälzpumpe das Waschmittel über einen Wärmeaustauscher in die Waschstrecke gepumpt und dort wirksam. Über den Rücklauf gelangt die Flüssigkeit, die durch die Aufnahme der Abwärme der Brennkammer erwärmt wurde, in den Behälter. Im Behälter wird der pH-Wert gemessen und durch kontinuierliches bzw. diskontinuierliches Zudosieren von Laugen, z. B. NaOH, KOH, $NH_4OH$ oder Säuren, z. B. $H_2SO_4$, konstant gehalten. Um die Konzentration bei der Neutralisation der säurehaltigen Gase, z. B. HF, HCl, entstehenden Salze, z. B. KF, KCl konstant zu halten, wird kontinuierlich oder diskontinuierlich ein Teil des Waschmittels durch Wasser ersetzt.

Kontinuierlich oder zyklisch werden aus dem Behälter die festen Teilchen und Schlämme abgesaugt, die in bestimmten Bereichen des Behälters durch Einrichtungen zur Abscheidung angereichert worden sind. Der durch das Absaugen eintretende Verlust an Waschflüssigkeit im Behälter wird durch Frischwasserzufuhr und Dosieren von Chemikalien ausgeglichen. Frischwasserzufuhr in den Behälter kann auch zur genauen Einstellung des erforderlichen pH-Wertes erforderlich sein.

Infolge von Konzentrationsunterschieden der Waschflüssigkeit an verschiedenen Orten des Behälters, und damit Unzulänglichkeiten der pH-Wertmessung, kann es erforderlich sein, daß mit einer relativ großen Differenz des sauren oder basischen pH-Wertes gegenüber dem neutralen pH-Wert (pH = 7) gearbeitet werden muß, um zu erreichen, daß die schädlichen Sekundärprodukte der Abgasverbrennung vollständig neutralisiert werden. Dieses Vorgehen hat zum Einen die nachteilige Konsequenz, daß der Verbrauch an Laugen oder Säuren unnötig groß ist. Zum Anderen ist damit außerdem der Nachteil verbunden, daß der pH-Wert, der zum Zwecke der Entfernung von Schlämmen und festen Teilchen aus dem Behälter abgepumpten Waschflüssigkeit von dem Neutralwert (pH = 7) stark abweicht. Infolge der zuletzt genannten Unzulänglichkeit reagiert die mit den Schlämmen oder festen Teilchen abgesaugte Waschflüssigkeit noch unzulässig sauer oder basisch und erfordert vor deren Ablassen in die Umgebung noch zusätzliche Aufwendungen zu deren Neutralisierung.

Ein weiterer Nachteil bekannter Flüssigkeitskreisläufe besteht darin, daß während des Vorganges des Absaugens der Schlämme und festen Teilchen und während der Zufuhr von Frischwasser die Einstellung des optimalen pH-Wertes der Waschflüssigkeit im Vorlauf für die vollständige Neutralisierung der schädlichen Sekundärprodukte aus dem Abgas zeitweilig nicht eingehalten werden kann, so daß in solchen "Störzeiten" eine unzulässige Menge von Schadstoffen in die Abluft gelangen kann oder unnötige Mengen an Chemikalien zugeführt werden müssen.

Der Erfindung liegt die Aufgabe zugrunde, Mängel des Standes der Technik bekannter Flüssigkeitskreisläufe durch Verbesserung der Wirkungsweise von Funktionen des Flüssigkeitskreislaufes zu überwinden und Kostenreduzierungen durch Einsparungen an den zuzuführenden Chemikalien und am erforderlichen Frischwasservolumen zu erzielen.

Dazu sind Störungen des optimalen Sorptions- und Neutralisationsprozesses der schädlichen Sekundärprodukte in der Waschstrecke während dem Absaugen separierter Schlämme im Behälter zu vermeiden. Die Separation von Schlämmen und festen Teilchen aus der Waschflüssigkeit ist zu verbessern. Außerdem ist die Funktion des Kreislaufes der Waschflüssigkeit bei minimaler Zufuhr von Frischwasser zu gewährleisten.

Die Aufgabe wird erfindungsgemäß durch ein Arbeitsverfahren und eine zu dessen Ausführung erforderliche Einrichtungen nach Anspruch 1 bis 8 gelöst.

Bei dem Arbeitsverfahren wird davon ausgegangen, daß zur Realisierung eines Flüssigkeitskreislaufes die erforderlichen Vorrichtungen bzw. Baugruppen entsprechend dem Stand der Technik ausgeführt sind. So besteht der Flüssigkeitskreislauf im Wesentlichen aus einem Behälter für die Waschflüssigkeit, einer Pumpe für die Umwälzung der Waschflüssigkeit über Vorlauf und Ablauf der Waschstrecke, einem Wärmetauscher zur Kühlung der Waschflüssigkeit, einer Dosierung der Chemikalien für den Waschprozeß, einer Frischwasserzufuhr, einer Einrichtung zur Separation von festen Teilchen und Schlämmen und einer Absaugung der separierten festen Teilchen und Schlämme.

Erfindungsgemäß erfolgt für einen solchen Flüssigkeitskreislauf der Rücklauf der Waschflüssigkeit in den Behälter über einen Einlauf, z. B. ein Rohr, am Boden eines Einlaufgefäßes, das in einem Zwischengefäß angeordnet ist. Über eine Öffnung, z. B. eine Bohrung, im mittleren Wandbereich des Einlaufgefäßes kommuniziert und fließt die rücklaufende Waschflüssigkeit mit dem bzw. in das Zwischengefäß. Auf diese Weise ist das Einlaufgefäß stets vom Boden bis zu besagter Öffnung gefüllt, unabhängig davon ob das Zwischengefäß gefüllt ist oder nicht, auch unabhängig davon ob Waschflüssigkeit im Kreislauf umgewälzt wird oder nicht. Im Bereich zwischen dem Boden des Einlaufgefäßes und besagter Öffnung ist ein pH-Sensor angeordnet, auf diese Weise steht der Meßwert des pH-Sensors bei jedem Betriebszustand des Kreislaufes zur Verfügung unabhängig vom Pegel der Waschflüssigkeit im Behälter oder im Zwischengefäß, sogar wenn, z. B. zur Schlammabsaugung, der Zwischenbehälter vollständig geleert würde.

Durch einen oder mehrere Überläufe, z. B. Bohrungen, im oberen Wandbereich des Zwischengefäßes fließt die Waschflüssigkeit in das Volumen des Behälters erst über, wenn das Zwischengefäß bis zu den Überläufen erfüllt ist. Die Absaugung der verbrauchten Waschflüssigkeit erfolgt aus besagtem Zwischengefäß mit Hilfe eines Absaugleitung, z. B. ein Rohr, die durch einen Deckel von oben in das Zwischengefäß eingeführt wird, durch eine stirnseitige Öffnung der Absaugleitung in unmittelbarer Nähe des Bodens des Zwischengefäßes. Das Zwischengefäß dient der Separation von festen Teilchen und Schlämmen aus der Waschflüssigkeit. Da die Strömungsgeschwindigkeit der Waschflüssigkeit im Zwischengefäß klein gegenüber der in der Rücklaufleitung ist, sinken feste Teilchen und Schlämme auf den Boden des Zwischengefäßes. Da die Waschflüssigkeit durch die Öffnung im mittleren Wandbereich zufließt und in Richtung der Überläufe abfließt, ist die Waschflüssigkeit im Bereich des Bodens des Zwischengefäßes praktisch in Ruhe. Dort sind also günstige Bedingungen für das Absetzen der festen Teilchen und Schlämme geschaffen. Erfolgt die Absetzung auf besagte Weise im Zwischenbehälter, so geschieht sie ungestört von Strömungen oder gar Turbulenzen in der Waschflüssigkeit im Behälter, die dort durch die Saugwirkung der Umwälzpumpe, beim Dosieren von Chemikalien und bei der Frischwasserzufuhr in den Behälter auftreten. Die besagten Einrichtungen sichern, daß die Absaugung von festen Teilchen und Schlämmen kontinuierlich oder zyklisch erfolgen kann, ohne die Messung des pH-Wertes der rücklaufenden Waschflüssigkeit, den Umlauf der Waschflüssigkeit, die Dosierung von Chemikalien und die Zufuhr von Frischwasser zu stören.

Die Volumina der drei besagten Gefäße sind unterschiedlich groß ausgeführt. Für die Verhältnisse der Volumina von Behälter $V_B$, Zwischengefäß $V_Z$ und Einlaufgefäß $V_E$ gilt:

$$V_E \ll V_Z \text{ und } V_Z \ll V_B$$

Da infolgedessen das Volumen der Waschflüssigkeit im Einlaufgefäß sehr gering ist gegenüber dem Volumen der Waschflüssigkeit im Kreislauf, repräsentiert die Messung des pH-Wertes der Waschflüssigkeit im Einlaufgefäß praktisch den Neutralisierungszustand der Waschflüssigkeit am Ausgang der Waschstrecke. Es tritt damit praktisch kaum eine Retardierung gegenüber dem Zustand am Ausgang der Waschstrecke ein. Gegenüber einer pH-Messung im Zwischengefäß oder im Behälter erfolgt kein Verfälschung des Meßwertes durch Dosierung von Chemikalien oder durch Frischwasserzufuhr. Auch das Abpumpen von Teilchen oder Schlämmen aus dem Zwischengefäß führt zu keinem Meßfehler, da die Füllung des Einlaufgefäßes bis zur Öffnung davon nicht beeinträchtigt wird.

Die Messung des pH-Wertes im Einlaufgefäß gewährleistet einerseits also die optimale Anpassung der Dosierungsmenge der Chemikalien an die Menge der in der Waschstrecke zu neutralisierenden schädlichen Sekundärprodukte andererseits die Kontrolle, daß die Waschflüssigkeit im Rücklauf möglichst neutral reagiert, d. h. einen pH-Wert hat, der wenig von 7 verschieden ist.

Da das Volumen des Zwischenbehälters klein gegen das Volumen des Behälters ist, kann dieses Gefäß mit den Einrichtungen zur Separation der festen Teilchen und Schlämme innerhalb dieses Behälters angeordnet werden, ohne den notwendigen Vorrat an Waschflüssigkeit wesentlich zu begrenzen.

Das Einlaufgefäß hat nicht nur ein sehr kleines Volumen im Vergleich zum Behälter, sondern es ist darüber hinaus so ausgeführt, daß der Innendurchmesser des Einlaufgefäßes nur wenig größer, maximal 20 mm größer, als der Außendurchmesser des Einlaufes ist und daß die Stirnfläche des Einlaufes vom Boden desselben einen geringen Abstand hat, vorzugsweise wenige mm. Dadurch wird gewährleistet, daß die Strömungsgeschwindigkeit der Waschflüssigkeit im gesamten Einlaufgefäß so groß gehalten wird, daß kein Absetzen von festen Teilchen und Schlämmen im Einlaufgefäß stattfinden kann. Dies ist eine Voraussetzung dafür, daß keine Verfälschungen des pH-Meßwertes durch mögliche Abscheidungen eintreten können. Außerdem wird so eine Reinigung des Einlaufgefäßes erst nach extrem großen Betriebszeiten notwendig.

Das Einlaufgefäß ist derart exzentrisch in dem zylindrischen Zwischengefäß angeordnet, daß der Winkel α zwischen der Verbindungslinie der Achsen von Einlaufgefäß und Zwischengefäß und der Mittelachse der Öffnung im mittleren Wandbereich des Einlaufgefäßes 5 ° bis 20 ° beträgt. Außerdem erfolgt die Anordnung des Einlaufgefäßes so, daß sich ein Abstand zwischen der äußeren Wand des Einlaufgefäßes und der inneren Wand des Zwischengefäßes von 5 bis 10 mm einstellt. Der Boden des Zwischengefäßes wird als Kegel mit einem Kegelwinkel β von 90 ° bis 160 ° ausgeführt, die Kegelspitze des Bodens zeigt nach unten.

Unter Nutzung von an sich bekannten Elementen zur Realisierung eines Flüssigkeitszyklons werden auf diese Weise beim Strömen der Waschflüssigkeit im Zwischengefäß Verhältnis geschaffen, die eine effektive Separierung der festen Teilchen und Schlämme aus der Waschflüssigkeit und deren Abscheidung insbesondere in der Spitze des Kegels bewirken. Die aus dem Zwischengefäß in den Behälter überlaufende Waschflüssigkeit ist praktisch frei von festen Teilchen und Schlämmen, eine Voraussetzung dafür, daß durch sie keine Störungen in der Waschstrecke verursacht werden. Umgekehrt wird die effektive Abscheidung im Zwischengefäß nicht durch die Dosierung von Chemikalien oder den Frischwasserzufluß gestört.

Die in der Achse des Zwischengefäßes angeordnete Absaugleitung weißt in die Spitze des kegelig ausgeführten Bodens des Zwischengefäßes also genau auf die Stelle in der bevorzugt die Absetzung erfolgt. Um auch die Effektivität der Absaugung zu erhöhen, wird der Abstand der Stirnfläche der Absaugleitung zum Boden des Zwischengefäßes gering ausgeführt, vorzugsweise wenige mm. Auf diese Weise wird bei gegebenem Fluß der Absaugung lokal, im Bereich der abgesetzten Teilchen und Schlämme, eine hohe Strömungsgeschwindigkeit erzielt. Im Endergebnis dieser Maßnahmen wird gesichert, daß zur Absaugung der abgesetzten festen Teilchen und Schlämme nur eine minimale Menge von Waschflüssigkeit erforderlich ist.

Der Volumenstrom bei der Absaugung ist durch die Dimensionierung der Pumpe für die Absaugung groß gegen den durch die Umwälzpumpe im Behälter realisierten Fluß von Waschmittel durch die Waschstrecke, vorzugsweise mehr als das dreifache.

Wird der Abpumpvorgang von Abwasser eingeleitet, so wird der Zwischengefäß auf Grund des höheren Volumenstromes des Abwassers gegenüber dem des Waschmittels derart entleert, daß die Flüssigkeit aus dem Zwischengefäß nicht mehr in den Behälter überläuft. Dadurch erfolgt während des Abpumpvorganges von Abwasser im zwischengefäß keine Änderung des pH-Wertes der Waschflüssigkeit im Behälter, so daß weiter Waschflüssigkeit mit ausreichendem pH-Wert in den Vorlauf eingespeist werden kann. Der Neutralisationsprozeß wird also beim Abpumpen von Abwasser einerseits nicht gestört, andererseits wird eine Änderung des pH-Wertes des Abwassers zu ungünstigen Werten vermieden.

Durch den hohen Volumenstrom beim Absaugen von Abwasser aus dem Zwischengefäß herrscht an der Öffnung der Absaugleitung eine hohe Strömungsgeschwindigkeit der Waschflüssigkeit. Die am Boden des Zwischengefäßes separierten festen Teilchen und Schlämme werden optimal abgesaugt.

Darüber hinaus wird es bei dem kleinen Verhältnis des Volumens $V_Z$ des Zwischengefäßes zum Volumen $V_B$ des Behälters bzw. zum Volumen der Waschflüssigkeit im Behälter möglich beim Absaugen der separierten festen Teilchen und Schlämme sogar den gesamten Inhalt des Zwischengefäßes abzusaugen und dabei trotzdem den Verlust an Waschflüssigkeit für die Neutralisation klein zu halten.

In dem erfindungsgemäßen Kreislauf für die Waschflüssigkeit erfolgen in an sich bekannter Weise das Pumpen der Waschflüssigkeit in den Vorlauf, die Dosierung der Chemikalien und der Zufluß von Frischwasser in das Volumen des Behälters.

Die hohe Effektivität der Abscheidung von festen Teilchen und Schlämmen und der geringe Bedarf an Waschflüssigkeit zum Absaugen derselben wirken sich auch darin aus, daß mit dem erfindungsgemäß ausgeführten Flüssigkeitskreislauf der Verbrauch an Chemikalien und Frischwasser sehr niedrig ist.

Die Steuerung der Dosierung der Chemikalien und des Zuflusses von Frischwasser in die Waschflüssigkeit kann zweckmäßigerweise durch den Meßwert des pH-Sensors erfolgen.

Dabei ist bei der Neutralisierung von sauren Reaktionsprodukten in der Waschstrecke mit wachsender positiver Differenz des pH-Meßwertes und 7 eine wachsende Menge von Base in den Behälter des Flüssigkeitskreislaufes zu dosieren und mit wachsender negativer Differenz des pH-Meßwertes und 7 eine wachsende Menge von Frischwasser. Durch die zusätzliche Nutzung der Frischwassermenge zur Steuerung wird auch bei zeitweise geringerem Bedarf der Waschstrekke an Base vermieden, daß nennenswerte Mengen der in der Waschstrecke überschüssigen Base im Rücklauf vorhanden sind.

Durch die Steuerung der Dosierung der Chemikalien und des Zuflusses von Frischwasser durch den Meßwert des pH-Sensors wird erreicht, daß beim Absaugen von separierten festen Teilchen oder Schlämmen das erforderliche Volumen von Waschflüssigkeit im Behälter rasch wieder eingestellt wird und der für die Neutralisation der Menge anfallender schädlicher Sekundärprodukte notwendige pH-Wert im Vorlauf eingehalten wird. Außerdem wird so gesichert, daß die beim Absaugen von separierten festen Teilchen und Schlämmen unvermeidlich mit abgesaugte Flüssigkeit möglichst neutral ist.

Sind dagegen basische Reaktionsprodukte in der Waschstrecke zu neutralisieren, so ist mit zunehmender negativer Differenz des pH-Meßwertes und 7 eine wachsende Menge von Säure in den Behälter des Flüssigkeitskreislaufes zu dosieren und mit wachsender positiver Differenz des pH-Meßwertes und 7 eine wachsende Menge von Frischwasser.

Das Zusammenwirken der Fertigungsanlage, in der das Abgas anfällt, und der Gasreinigungseinrichtung sowie die Funktion derselben wird in der Regel durch eine Prozeßsteuerung bewerkstelligt. Im Programm für diese Steuerung werden Signale und Meßwerte von Sensoren des Flüssigkeitskreislaufes genutzt, z. B. der pH-Meßwert und Niveausignale.

Es kann aber auch zweckmäßig sein, in der Prozeßsteuerung anstelle besagter Signale und Meßwerte Prozeßdaten des Reaktors oder/und von Prozeßdaten der Fertigungsanlage zu verwerten und auf ihrer Basis die Steuerung der Dosierung der Chemikalien und des Zuflusses von Frischwasser in die Waschflüssigkeit zu bewerkstelligen.

Als Prozeßdaten einer Brennkammer eignen sich z. B. die Durchflußmengen und Drücke des eingesetzten Brenngases und der zugeführten Luft oder des zugeführten Sauerstoffes, sowie die Temperatur in der Brennkammer. Als Prozeßdaten der Fertigungsanlage, z. B. einer plasmachemischen Ätzanlage oder einer plasmachemischen Anlage zur Abscheidung von dünnen Schichten, eignen sich solche Betriebsparameter, wie z. B. Art, Zusammensetzung und Flußmengen der eingelassenen Prozeßgase und Betriebsparameter der Prozeßeinrichtung, wie z. B. Arbeitsdruck in dieser Einrichtung, und elektrische Parameter, z. B. die elektrische Leistung der Plasmaätzanlage.

Ein weitere zweckmäßige Lösung kann darin bestehen, im Programm der Prozeßsteuerung der Gasreinigungseinrichtung sowohl Niveausignale des Waschflüssigkeitspegels und den pH-Meßwert als auch oben angeführte Prozeßdaten des Reaktors oder/und Prozeßdaten der Fertigungsanlage zur Dosierung der zugeführten Chemikalien in die Waschflüssigkeit und zur Steuerung der Zufuhr von Frischwasser in den Flüssigkeitskreislauf zu verwerten.

Die Erfindung wird in Form eines Ausführungsbeispiels anhand der Zeichnungen näher erläutert. Es stellen dar:

Fig. 1    einen schematischen Flüssigkeitskreislauf mit einem Querschnitt durch den Behälter für die Waschflüssigkeit und

Fig. 2    einen schematischen Schnitt durch das Einlauf- und Zwischengefäß des Flüssigkeitskreislaufes.

In einer Gasreinigungseinrichtung sind in einer schrankförmigen Baueinheit die Brennkammer (1), die Waschstrecke (2) und der Flüssigkeitskreislauf für die Waschflüssigkeit integriert. Der Brennkammer wird durch die Leitungen (3) und (4) Wasserstoff und Sauerstoff für den Betrieb des Brenners zugeführt. In die Flamme des Brenners wird das durch die Leitung (5) zugeführte Abgas geleitet, das unter anderem Tetrafluormethan enthält, wenn es aus einer plasmachemischen Ätzanlage herrührt, wie sie bei der Herstellung mikroelektronischer Schaltkreise verwendet wird. Nach der Brennkammer enthält das viele hundert Grad heiße Abgas als wesentlichstes schädliches Sekundärprodukt HF und $SiO_2$. In der Waschstrecke (2) werden die heißen Abgase mit Hilfe einer Sprüheinrichtung (6) durch die Waschflüssigkeit abgekühlt, hydrolisiert und neutralisiert. Der Fluorwasserstoff wir durch die NaOH-Lösung neutralisiert, wobei NaF entsteht. Das staubförmige $SiO_2$ wird von der Waschflüssigkeit als Suspension aufgenommen und mit der Waschflüssigkeit aus der Waschstrecke (2) geschwemmt. Das gereinigte Abgas gelangt durch Rohr (7) in die Abluft.

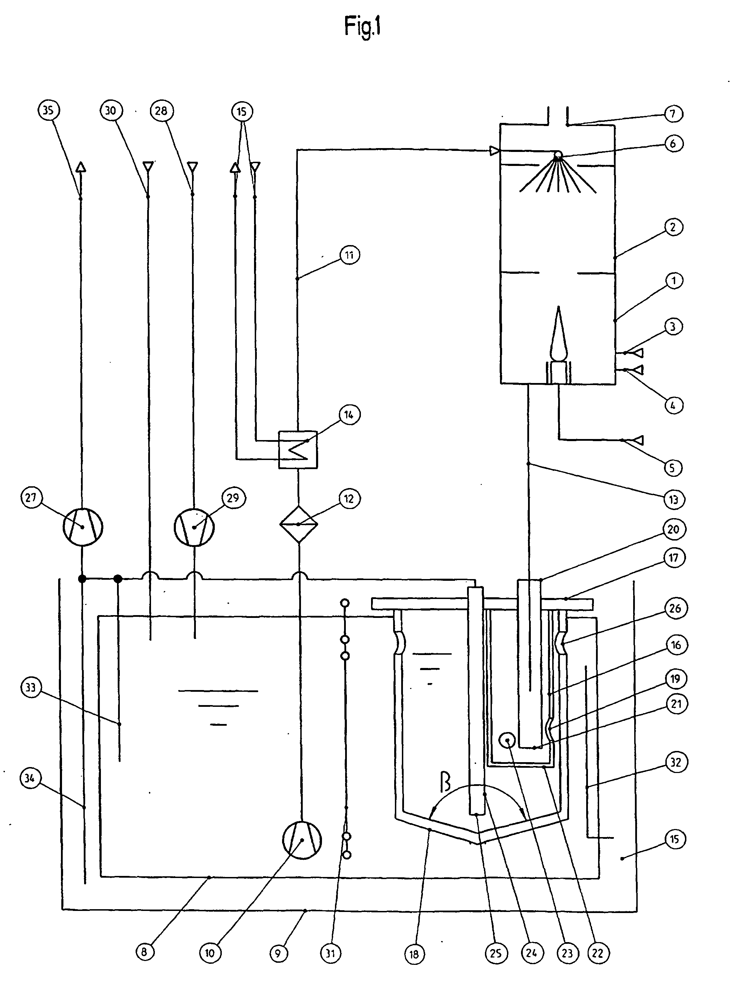

Wie in Fig. 1 dargestellt, besteht der Flüssigkeitskreislauf für die Waschstrecke (2) im wesentlichen aus einem Behälter (8) aus Polypropylen für den Vorrat an Waschflüssigkeit. Der Behälter hat ein Volumen von 50 Liter. Aus Gründen des Havarieschutzes ist der Behälter (8) in einem Sicherheitsbehälter (9) aus Polypropylen eingestellt, der im Leck- oder Havariefall den gesamten Vorrat an Waschflüssigkeit aufnehmen kann. In die Waschflüssigkeit im Behälter (8) ist eine Tauchpumpe (10) eingesetzt, die über den Vorlauf (11) die Waschflüssigkeit zunächst durch den Filter (12) danach in den Plattenwärmetauscher (14) und hiernach in die Waschstrecke (2) pumpt. Aus der Waschstrecke fließt die Waschflüssigkeit drucklos über den Rücklauf (13) in das Einlaufgefäß (16).

An einem Deckelflansch (17) des Behälters (8) ist ein Zwischengefäß (18) und das in diesem angeordnete Einlaufgefäß (16) befestigt. Das Zwischengefäß (18) hat einen Durchmesser von 180 mm und entsprechend seiner Höhe ein Volumen $V_Z$ von etwa 4 Liter. Das Einlaufgefäß (16) hat einen Durchmesser von 65 mm und ein Volumen von etwa 0,4 Liter. In der Mitte der Mantelfläche des Einlaufgefäßes (16) ist eine Bohrung (19) von 30 mm Durchmesser angebracht. Durch den Deckelflansch (17) ist das Einlaufrohr (20) mit einem Durchmesser von 40 mm in das Einlaufgefäß (16) geführt. Der Abstand zwischen der stirnseitigen Öffnung (21) des Einlaufrohres (20) und dem Boden (22) des Einlaufgefäßes (16) beträgt 5 mm. Durch den Deckelflansch (17) des Behälters (8) ist zum Zweck der pH-Wertmessung außerdem ein pH-Sensor (23) in das Einlaufgefäß (16) geführt.

Weiterhin ist durch den Deckelflansch (17) in der Achse des Zwischengefäßes (18) das Absaugrohr (24) mit einem Durchmesser von 20 mm geführt, dessen stirnseitige Öffnung (25) etwa einen Abstand vom Boden des Zwischengefäßes (18) von 4 mm hat. Im oberen Wandbereich des Zwischengefäßes (18) sind, auf dem Umfang gleichmäßig verteilt, 10 Bohrungen (26) von 20 mm Durchmesser ausgeführt, der Abstand der Mitten dieser Bohrungen zur Innenwand des Deckelflansches (17) beträgt 20 mm.

Die aus der Waschstrecke (2) rücklaufende Waschflüssigkeit fließt durch das Einlaufrohr (20) in das Einlaufgefäß (16), von dort durch die Bohrung (19) in das Zwischengefäß (18). Einlaufgefäß (16) und Zwischengefäß (18) sind infolge der Möglichkeit zum kommunizieren durch Bohrung (19) bis zu den Überlaufbohrungen (26) mit Waschflüssigkeit gefüllt, die durch diese Bohrungen in den Behälter (8) überfließt. Aus dem Vorrat an Waschflüssigkeit im Behälter (8) pumpt die Tauchpumpe (10) die Waschflüssigkeit in den Vorlauf (11) der Waschstrecke (2). Durch Schaltbefehle der Programmsteuerung wird in bestimmten zeitlichen Abständen mit Hilfe der Membranpumpe (27) durch das Absaugrohr (24) eine begrenzte Menge Waschflüssigkeit mit am Boden des Zwischengefäßes (18) abgesetzten festen Teilchen und Schlämmen in die Abflußleitung gepumpt. Aus einem Vorratsgefäß erfolgt über die Leitung (28) und eine Dosierpumpe (29) entsprechend Vorgaben der Programmsteuerung die Dosierung von 50 %-iger Natronlauge in den Behälter (8). Aus der Frischwasserleitung (30) erfolgt durch Schaltbefehle der Programmsteuerung auf der Basis von pH-Meßwerten oder/und Signalen der Niveausensorn (31) für das Niveau der Waschflüssigkeit im Behälter (8) die Frischwasserzufuhr. Für den Schutz des Behälters gegenüber unzulässiger Frischwasserzufuhr infolge von Störungen ist im Behälter noch ein Überlauf (32) angeordnet.

Zum Zweck der Reinigung des Behälters (8) oder im Falle einer Havarie erfolgt über die Tauchrohre 33 und 34 das Abpumpen der Flüssigkeit aus dem Behälter (8) oder aus dem Sicherheitsbehälter (9) mit Hilfe der Membranpumpe (27) in die Leitung (35) (bei entsprechen der Steuerung von in Fig. 1 nicht dargestellten Ventilen in den Leitungen).

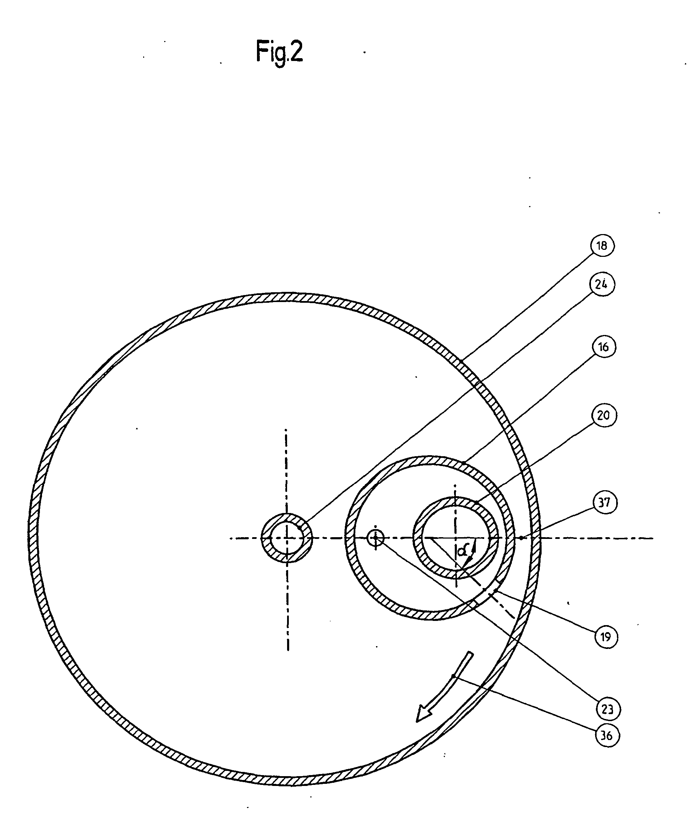

Aus Fig. 2 ist die Anordnung des Absaugrohres (24) in der Achse und die exzentrische Anordnung des Einlaufgefäßes (16) im Zwischengefäß (18) ersichtlich. Die Exzentrizität ist so gewählt, daß sich zwischen der äußeren Wand des Einlaufgefäßes (16) und der inneren Wand des Zwischengefäßes (18) ein Abstand (37) von 8 mm einstellt. Der Winkel α zwischen der Verbindungslinie der Achsen von Einlaufgefäß (16) und Zwischengefäß (18) und der Achse der Bohrung (19) im mittleren Wandbereich des Einlaufgefäßes (16) beträgt 20 °. Infolge der besagten Dimensionierungen wird im mittleren Wandbereich des Zwischengefäßes (18) eine Strömung der Waschflüssigkeit in Pfeilrichtung (36) erzwungen. Es wird im Zwischengefäß (18) ein Strömungsprofil erzwungen, daß zum Absetzen fester Teilchen und Schlämme im Bereich des Zwischengefäßes (18) führt.

Die Position des pH-Sensors (23) im Einlaßgefäß ist parallel zum Einlaufrohr (20).

Für die Funktion des Flüsigkeitskreislaufes sind über die in Fig. 1 dargestellten Baugruppen und Funktionselemente hinaus eine Reihe weiterer Elemente erforderlich wie z. B.: Pneumatisch schaltbare Ventile in den Gas- und Flüssigkeitsleitungen, Temperatursoren zur Kontrolle der Temperatur der Waschflüssigkeit in der Waschstrecke (2) und im Behälter (8) sowie Druckmeßgeräte und Leckwarnsensoren.

**Patentansprüche**

1. Flüssigkeitskreislauf für die Waschstrecke eines Reaktors zur Ausführung chemischer Prozesse, vorzugsweise einer Brennkammer für die Reinigung schadstoffhaltiger Abgase, zur Beseitigung fester und flüchtiger, schädlicher Sekundärprodukte mit einem Behälter (8) für die Waschflüssigkeit, einer Pumpe (10) für die Umwälzung der Waschflüssigkeit über Vorlauf (11) und Rücklauf (13) der Waschstrecke, mit einem Wärmetauscher (14) zur Kühlung der Waschflüssigkeit , mit einer Dosierung der Chemikalien (19) für den Waschprozeß, mit einer Frischwasserzufuhr (30), mit einer Einrichtung zur Separation von festen Teilchen und Schlämmen und mit einer Absaugung (24) der separierten festen Teilchen und Schlämme, **dadurch gekennzeichnet, daß** der Rücklauf (13) der Waschflüssigkeit in den Behälter (8) über ein Einlaufrohr (20) am Boden eines Einlaufgefäßes (16) erfolgt, daß die Messung des pH-Wertes der Waschflüssigkeit in diesem Einlaufgefäß (16) mit einem pH-Sensor (23) erfolgt, daß das Einlaufgefäß (16) in einem Zwischengefäß (18) angeordnet ist, daß die rücklaufende Waschflüssigkeit im Einlaufgefäß (16) und im Zwischengefäß (18) kommuniziert und fließt, daß die Waschflüssigkeit durch einen Überlauf (26) des Zwischengefäßes (18) in das Volumen des Behälters (8) überfließt, daß die Absaugung der verbrauchten Waschflüssigkeit mit Hilfe eines Absaugrohres (24) aus dem Zentrum des Zwischengefäßes (18) in unmittelbarer Nähe des Bodens desselben erfolgt und daß für die Verhältnisse der Volumina von Behälter $V_B$, Zwischengefäß $V_Z$ und Einlaufgefäß $V_E$ gilt:

$$V_E << V_Z \text{ und } V_Z << V_B$$

2. Flüssigkeitskreislauf nach Anspruch 1, **dadurch gekennzeichnet, daß** der Innendurchmesser des Einlaufgefäßes (16) nur wenig größer, maximal 20 mm größer, als der Außendurchmesser des Einlaufrohres (20) ist und daß die Stirnfläche des Einlaufrohres (20) vom Boden desselben einen geringen Abstand hat, vorzugsweise wenige mm.

3. Flüssigkeitskreislauf nach Anspruch 1 und 2, **dadurch gekennzeichnet, daß** das zylindrische Einlaufgefäß (16) derart exzentrisch in dem zylindrischen Zwischengefäß (18) angeordnet ist, daß der Winkel α zwischen der Verbindungslinie der Achsen von Einläßgefäß und Zwischengefäß und der Achse der Bohrung im mittleren Wandbereich des Einlaßgefäßes 5 ° bis 40 ° beträgt, daß der Abstand (37) zwischen der äußeren Wand des Einlaufgefäßes (16) und der inneren Wand des Zwischengefäßes (18) 5 bis 10 mm beträgt und daß der Boden des Zwischengefäßes als Kegel mit einem Kegelwinkel β von 90 ° bis 160 ausgeführt ist.

4. Flüssigkeitskreislauf nach Anspruch 1 bis 3, **dadurch gekennzeichnet, daß** der Abstand der stirnseitigen Öffnung (25) der Absaugleitung (24) zum Boden des Zwischengefäßes (18) gering ist, vorzugsweise wenige mm und der Volumenstrom für die Schlammabsaugung groß gegen den durch die Umwälzpumpe im Behälter realisierten Volumenstrom von Waschmittel durch die Waschstrecke ist, vorzugsweise mehr als das dreifache.

5. Flüssigkeitskreislauf nach Anspruch 1 bis 4, **dadurch gekennzeichnet, daß** das Pumpen der Waschflüssigkeit in den Vorlauf (11) aus dem Volumen, die Dosierung der Chemikalien und der Zufluß von Frischwasser in das Volumen des Behälters (8) außerhalb des Volumens des Zwischengefäßes (18) und außerhalb des Volumens des Einlaufgefäßes (16) erfolgt, daß dagegen der Rücklauf in das Einlaufgefäß (16) und das Absaugen der festen Teilchen und Schlämme aus dem Zwischengefäß (18) erfolgt

6. Flüssigkeitskreislauf nach Anspruch 1 bis 5, **dadurch gekennzeichnet, daß** die Steuerung der Dosierung der Chemikalien und des Zuflusses von Frischwasser in die Waschflüssigkeit durch den Meßwert des pH-Sensors gegebenenfalls zusätzlich durch Niveausignale erfolgt.

7. Flüssigkeitskreislauf nach Anspruch 1 bis 5, **dadurch gekennzeichnet, daß** in der Prozeßsteuerung anstelle von pH-Meßwerten und von Niveausignalen Prozeßdaten des Reaktors oder/und von Prozeßdaten der Fertigungsanlage verwertet werden und auf ihrer Basis die Steuerung der Dosierung der Chemikalien und des Zuflusses von Frischwasser in die Waschflüssigkeit bewerkstelligt wird.

8. Flüssigkeitskreislauf nach Anspruch 1 bis 5, **dadurch gekennzeichnet, daß** im Programm der Prozeßsteuerung der Gasreinigungseinrichtung sowohl Niveausignale und der pH-Meßwert als auch Prozeßdaten des Reaktors oder/ und Prozeßdaten der Fertigungsanlage verwertet werden.

**Claims**

1. A liquid circulation system for a reactor scrubbing path for the performance of chemical processes, preferably a combustion chamber for the purification of noxious exhaust gases, for eliminating solid and volatile noxious secondary products, comprising a tank (8) for the scrubbing liquid, a pump (10) for re-circulation of the scrubbing liquid via a feed pipe (11) and a return pipe (13) of the scrubbing path; a heat exchanger (14) for cooling the scrubbing liquid; a chemical-metering system (19) for the scrubbing process; a fresh-water supply (30); a device for separating solid particles and sludges; and an aspirator (24) of the separated solid particles and sludges; **characterized in that** the return (13) of the scrubbing liquid into the tank (8) takes place via an inlet pipe (20) at the bottom of an inlet vessel (16); **in that** measuring the pH of the scrubbing liquid in this inlet vessel (16) takes place by a pH sensor (23); **in that** the inlet vessel (16) is disposed in a surge drum (18); **in that** the returned scrubbing liquid communicates and flows in the inlet vessel (16) and in the surge drum (18); **in that** the scrubbing liquid passes through an overflow port (26) of the surge drum (18) into the volume of the tank (8); **in that** sucking off the used scrubbing liquid takes place by the aid of an aspirator pipe (24) from the center of the surge drum (18) in direct proximity to the bottom thereof; and **in that** the following applies to the relationship of the tank $V_B$, surge drum $V_Z$ and inlet vessel $V_E$: $V_E << V_Z$ and $V_Z << V_B$.

**2.** A liquid circulation system according to claim 1, **characterized in that** the inside diameter of the inlet vessel (16) only slightly exceeds the outside diameter of the inlet pipe (20), maximally by 20 mm; and **in that** the front face of the inlet pipe (20) has an inferior distance from the bottom thereof, preferably by few millimeters.

**3.** A liquid circulation system according to claim 1 and 2, **characterized in that** the cylindrical inlet vessel (16) is disposed eccentrically in the cylindrical surge drum (18) such that the angle α made by the connecting line of the axes of the inlet vessel and surge drum and by the axis of the bore in the central wall portion of the inlet vessel ranges from 5° to 40°; **in that** the distance (37) between the outer wall of the inlet vessel (16) and the inner wall of the surge drum (18) is 5 to 10 mm; and **in that** the bottom of the surge drum is a cone having a cone angle β of 90° to 160°.

**4.** A liquid circulation system according to claim 1 to 3, **characterized in that** the distance of the frontal opening (25) of the aspirator line (24) from the bottom of the surge drum (18) is small, preferably few millimeters, and **in that** the sludge-aspiration volume flow rate is important, preferably by three times exceeding the volume flow rate of scrubbing liquid through the scrubbing path that is accomplished by the re-circulation pump in the tank,.

**5.** A liquid circulation system according to claim 1 to 4, **characterized in that** pumping the scrubbing liquid into the feed pipe (11) takes place from the volume, and metering the chemicals and supplying fresh water takes place into the volume of the tank (8) outside the volume of the surge drum (18) and outside the volume of the inlet vessel (16); and **in that** the return flow into the inlet vessel (16) and sucking off the solid particles and sludges takes place from the surge drum (18).

**6.** A liquid circulation system according to claim 1 to 5, **characterized in that** controlling the metering of chemicals and the feed of fresh water into the scrubbing liquid is effected through measurement by the pH sensor, optionally additionally through level signals.

**7.** A liquid circulation system according to claim 1 to 5, **characterized in that**, instead of measured pH values and level signals, the process control evaluates reactor process data and/or manufacturing-system process data, on the basis of which is implemented the control of metering the chemicals and the supply of fresh water into the scrubbing liquid.

**8.** A liquid circulation system according to claim 1 to 5, **characterized in that** the process-control program of the gas purification system evaluates level signals and the measured pH as well as reactor process data and/or process data of the manufacturing plant.

**Revendications**

**1.** Circuit de liquide pour le parcours de lavage d'un réacteur pour l'exécution de processus chimiques, préférentiellement d'une chambre de combustion pour la purification de gaz d'échappement contenant des composants polluants, pour l'élimination de produits secondaires polluants solides et volatils, avec un réservoir (8) pour le liquide de lavage, une pompe (10) pour la recirculation du liquide de lavage par une amenée (11) et un retour (13) du parcours de lavage, avec un échangeur de chaleur (14) pour le refroidissement du liquide de lavage, avec un dosage des produits chimiques (19) pour le processus de lavage, avec une alimentation en eau fraîche (30), avec un dispositif de séparation des particules solides et des boues et avec une aspiration (24) des particules solides et des boues séparées, **caractérisé en ce que** le retour (13) du liquide de lavage dans le réservoir (8) est exécuté par une conduite d'admission (20) sur le fond d'un récipient d'admission (16), **en ce que** la mesure de pH du liquide de lavage est effectuée dans ce récipient d'admission (16) avec un senseur de pH (23)), **en ce que** le récipient d'admission (16) est disposé dans un récipient intermédiaire (18), **en ce que** le liquide de lavage de retour communique et s'écoule dans le récipient d'admission (16) et dans le récipient intermédiaire (18), **en ce que** le liquide de lavage excédentaire s'écoule par un trop-plein (26) du récipient intermédiaire (18) dans le volume du réservoir (8), **en ce que** l'aspiration du liquide de lavage utilisé est exécutée au moyen d'une conduite d'aspiration (24) depuis le centre du récipient intermédiaire (18) à proximité immédiate du fond de celui-ci, et **en ce que** les relations de volume du réservoir $V_B$, du récipient intermédiaire $V_Z$ et du récipient d'admission $V_E$ sont définies par :

$$V_E << V_Z \text{ et } V_Z << V_B$$

**2.** Circuit de liquide selon la revendication 1, **caractérisé en ce que** le diamètre intérieur du récipient d'admission (16) n'est que légèrement supérieur, au maximum de 20 mm, au diamètre extérieur de la conduite d'admission (20) et **en ce que** la surface frontale de la conduite d'admission (20) est à un intervalle réduit du fond de celui-ci, préférentiellement de quelques mm.

**3.** Circuit de liquide selon les revendications 1 et 2, **caractérisé en ce que** le récipient cylindrique d'admission (16) est excentriquement disposé dans le récipient cylindrique intermédiaire (18), de manière que l'angle α entre la ligne de jonction des axes du récipient d'admission et le récipient intermédiaire, et l'axe de l'alésage dans la zone centrale de paroi du récipient d'admission soit compris entre 5 ° et 40 °, **en ce que** l'intervalle (37) entre la paroi extérieure du récipient d'admission (16) et la paroi intérieure du récipient intermédiaire (18) soit compris entre 5 et 10 mm et **en ce que** le fond du récipient intermédiaire soit exécuté comme cône avec un angle de sommet β compris entre 90 ° et 160 °.

**4.** Circuit de liquide selon les revendications 1 à 3, **caractérisé en ce que** l'intervalle de l'ouverture frontale (25) de la conduite d'aspiration (24) au fond du récipient intermédiaire (18) est réduit, préférentiellement de quelques mm et **en ce que** le débit volumique pour l'aspiration des boues est élevé comparativement au débit volumique de liquide de lavage par le parcours de lavage réalisé par la pompe de recirculation dans le réservoir, préférentiellement plus que le triple.

**5.** Circuit de liquide selon les revendications 1 à 4, **caractérisé en ce que** le pompage de liquide de lavage vers l'amenée (11) est exécuté depuis le volume, le dosage des produits chimiques et l'alimentation en eau fraîche (30) dans le volume du réservoir (8) sont effectués à l'extérieur du volume du récipient intermédiaire (18) et à l'extérieur du volume du récipient d'admission (16), et **en ce que** le retour dans le récipient d'admission (16) et l'aspiration des particules solides et des boues sont en revanche effectués depuis le récipient intermédiaire (18).

**6.** Circuit de liquide selon les revendications 1 à 5, **caractérisé en ce que** la commande par valeur de mesure du senseur de pH du dosage des produits chimiques et de l'amenée d'eau fraîche dans le liquide de lavage, est le cas échéant additivement effectuée par des signaux de niveau.

**7.** Circuit de liquide selon les revendications 1 à 5, **caractérisé en ce qu'**au lieu des valeurs de mesure pH et des signaux de niveau, des données de processus du réacteur et/ou des données de processus de l'installation de fabrication sont exploitées dans la commande de processus, et **en ce que** la commande de dosage des produits chimiques et de l'amenée d'eau fraîche dans le liquide de lavage est effectuée sur cette base.

**8.** Circuit de liquide selon les revendications 1 à 5, **caractérisé en ce que** des signaux de niveau et la valeur de mesure pH aussi bien que des données de processus du réacteur et/ou des données de processus de l'installation de fabrication sont exploités dans le programme de commande de processus du dispositif de purification des gaz.

# Fig.1

Fig.2